# EUROPEAN PATENT APPLICATION

(11) **EP 2 309 437 A1**
(43) Date of publication of application: **13.04.2011**
(21) Application number: 09770275.7
(22) Date of filing: 26.06.2009
(51) Int. Cl.: G06Q 20/00, G06K 17/00, H04M 1/00, H04W 4/24, H04W 84/10

(54) **PORTABLE TERMINAL DEVICE, CHARGING PROCESSING METHOD FOR PORTABLE TERMINAL DEVICE, AND CHARGING SYSTEM**

(30) Priority: 27.06.2008 JP 2008169688; 27.06.2008 JP 2008169689
(71) Applicant: Kyocera Corporation, Kyoto-shi, Kyoto 612-8501 (JP)
(72) Inventor: WADA, Yuuki, Kanagawa 224-8502 (JP)
(74) Representative: Schwabe - Sandmair - Marx
(86) International application number: PCT/JP2009/061781
(87) International publication number: WO 2009/157565

(57) **Abstract**

An object of the present invention is to provide a portable terminal device capable of selectively performing a charging form with convenience for a user, a charging processing method for the portable terminal device, and a charging system.

The portable terminal device includes a key operation unit (6), an IC function unit (8) that performs communication relating to settlement of a plurality of kinds of electronic money with an outside, memories (7, 13) that stores charging information on the settlement of the electronic money, and a control unit (10) that selects, according to conditions, which electronic money among the plurality of kinds of electronic money is used to perform charging processing for charging information obtained from the charging communication when the IC function unit (8) performs the charging communication after a predetermined operation is performed to the key operation unit (6).

## Description

### Technical Field of the Invention

The present invention relates to a portable terminal device having an electronic money settlement function, a charging processing method for the portable terminal device and a charging system.

### Background Art

Portable terminal devices such as a portable telephone, etc. include a device model having an electronic money settlement function using a RFID (Radio Frequency Identification) communication, etc., and this kind of device model is widely used. The device having the settlement function of electronic money needs to have a security function, and has been required to improve a user identification function for authenticating a user that uses the portable terminal device.

For example, the portable terminal device having a user authentication function as described in Patent document 1 includes an IC card unit, and, in addition, a finger print authentication sensor attached to an outer casing member. The IC card unit is provided with a finger print information storage unit that stores information on a finger print of specific person such as a user, etc., and an external device information storage unit that stores information on the opposite user that transmits an access approval signal.

### Prior Art Documents

### Patent Documents

Patent Document 1: Japanese Patent Publication No. 2002-82914

### Summary of the Invention

### Problems to be Solved by the Invention

However, such a conventional portable terminal device is considered only for a single settlement means.

In addition, such a potable terminal device does not have the settlement means capable of discriminating charge between private business and company business, etc.

The present invention has been made in view of such an environment, and an object of the invention is to provide a portable terminal device capable of selectively performing a charging form with convenience for a user, a charging processing method for the portable terminal device and a charging system using the potable terminal device.

### Means for Solving the Problems

A portable terminal device according to a first aspect of the present invention comprises: a charging communication unit that includes a plurality of settlement sections and performs a charging communication relating to settlement of electronic money with an outside for each of the plurality of settlement sections; a storing unit that stores charging information on settlement of the electronic money for each of the plurality of settlement sections; and a control unit that determines whether a predetermined condition is satisfied when the charging communication unit performs the charging communication, and that updates each charging information of the storing unit, by using a first settlement section if the predetermined condition is satisfied and by using a second settlement unit if the predetermined condition is not satisfied.

It is preferable that the portable terminal device further comprise a display unit that displays the charging information stored in the storing unit by controlling of the control unit, and when displaying the charging information on the display unit, the control unit controls to display thereon the charging information for each of the first settlement section and the second settlement section by referring to stored contents of the storing unit.

It is preferable that at the starting of the charging communication by the charging communication unit, if the predetermined condition is satisfied, the control unit controls the charging communication unit not to make a response even if authentication of the second settlement section is requested by an external reader and writer, and the control unit controls the charging communication unit to make a response if authentication of the first settlement section is requested.

It is preferable that the charging communication unit is capable of performing settlement even when a power supply of the portable terminal device is off, and when power supply is off, the charging communication unit performs charging processing by the second settlement section, which is same as when any manipulation is not performed when the predetermined condition is not satisfied.

It is preferable that the portable terminal device further comprises an operation unit, and the predetermined condition is that the charging communication unit starts the charging communication at a state where the operation unit is manipulated.

It is preferable that the portable terminal device further comprise a closeable and openable case, and the predetermined condition is that the charging communication unit starts the charging communication at either one of an opened state and a closed state of the case.

It is preferable that the charging communication unit is capable of performing settlement independently from the control unit even when a power supply of the portable terminal device is off, and the storing unit is controlled by the charging communication unit independently from the control unit.

A charging processing method according to a second aspect of the present invention comprises: a charging communication unit performing a communication relating to settlement of each electronic money with an outside by a plurality of settlement sections; storing in a storing unit charging information on settlement of the electronic money for each of the plurality of settlement sections; determining whether a predetermined condition is satisfied when the charging communication unit performs the charging communication; and selecting a first settlement section if the predetermined condition is satisfied, and selecting a second settlement section if the predetermined condition is not satisfied.

A charging system according to a third aspect of the present invention comprises a reader and writer, and a portable terminal device that performs a charging communication relating to settlement of electronic money with the reader and writer, wherein the portable terminal device includes: a charging communication unit that includes a plurality of settlement sections and performs a charging communication relating to settlement of electronic money with an outside for each of the plurality of settlement sections; a charging communication unit that includes a plurality of settlement sections and performs a charging communication relating to settlement of electronic money with an outside for each of the plurality of settlement sections; a storing unit that stores charging information on settlement of the electronic money for each of the plurality of settlement sections; and a control unit that determines whether a predetermined condition is satisfied when the charging communication unit performs the charging communication, and that updates each charging information of the storing unit, by using a first settlement section if the predetermined condition is satisfied and by using a second settlement section if the predetermined condition is satisfied, and wherein the reader and writer is configured to: support the plurality of settlement sections, when communication with the portable terminal device starts, transmit to the portable terminal device an authentication request for charging processing by one of the first settlement section and the second settlement section, if there is a repose to the authentication request, perform a charging processing by the responded settlement section, and if there is no response to the authentication request for a predetermined time of period, transmit an authentication request by the other settlement section.

A portable terminal device according to a fourth aspect of the present invention comprises: a charging communication unit that performs a charging communication relating to settlement of electronic money with an outside; a storing unit that stores charging information on settlement of the electronic money; and a control unit that determines whether a predetermined condition is satisfied when the charging communication unit performs the charging communication, and stores charging information obtained through the charging communication while being associated with classification information that represents different charging type depending on whether the predetermined condition is satisfied or not.

It is preferable that the portable terminal device further comprises a display unit that displays the charging information stored in the storing unit by controlling of the control unit, and when displaying the charging information on the display unit, the control unit controls to display the charging information together with information based on the classification information by referring to stored contents of the storing unit.

It is preferable that the charging communication unit is capable of performing settlement independently from the control unit even when a power supply of the portable terminal is off, when the power supply of the portable terminal device is turned on, the control unit determines whether the charging communication is performed while the power supply is off, and if it is determined that the charging communication is performed, the control unit causes the display unit to display a screen for setting classification information for the charging information in the charging communication and stores a set result in the storing unit.

It is preferable that the charging communication unit is capable of performing settlement independently from the control unit even when a power supply of the portable terminal is off, when the power supply of the portable terminal device is turned on, or when charging information is requested to be displayed on the display unit, the control unit determines whether the storing unit has charging information that is not associated with any classification information, and if charging information that is not associated with any classification information exists, the control unit causes the display unit to display a screen for setting classification information for the charging information and stores a set result in the storing unit.

It is preferable that the charging communication unit is capable of performing settlement independently from the control unit even when a power supply of the portable terminal is off, the storing unit includes a first storing unit that is controlled by the charging communication unit and a second storing unit that is controlled by the control unit and stores the classification information, when the power supply of the portable terminal device is turned on, or when charging information is requested to be displayed on the display unit, the control unit compares charging information stored in both of the first storing unit and the second storing unit, and if the charging information that is not stored in the second storing unit but stored in the first storing unit exists, the control unit causes the display unit to display a screen for setting classification information for the charging information and stores a set result in the second storing unit.

It is preferable that the portable terminal device further comprises a display unit that displays the charging information stored in the storing unit by controlling of the control unit, and when displaying a plurality of the charging information on the display unit, the control unit refers to stored contents of the storing unit and causes to display only charging information on one of charging when the predetermined condition is satisfied and charging when the predetermined condition is not satisfied.

It is preferable that the portable terminal device further comprises an operation unit, and the predetermined condition is that the charging communication unit starts the charging communication at a state where the operation unit is manipulated.

It is preferable that the portable terminal device further comprises a closeable and openable case, and the predetermined condition is that the charging communication unit starts the charging communication at either one of an opened state and a closed state of the case.

### Effects of the Invention

According to the present invention, there is provided a portable terminal device for selectively performing a charging form with convenience for a user, a charging processing method for the portable terminal device and a charging system using the portable terminal device.

### Brief Description of the Drawings

FIG 1 is a block diagram showing a configuration of a portable terminal device according to a first embodiment of the present invention.
FIG. 2 is an explanatory view showing an operation of the portable terminal device shown in FIG. 1.
FIG 3 is an explanatory view showing an operation of the portable terminal device of FIG. 1.
FIG 4 is an explanatory view showing an operation of a portable terminal device according to a second embodiment of the invention.
FIG. 5 is a block diagram showing a configuration of a charging system using a portable terminal device according to a third embodiment of the invention.
FIG. 6 is an explanatory view showing an operation of the charging system using the portable terminal device of FIG. 5.

### Description of Embodiments

Hereinafter, embodiments of the present invention will be described with reference to the drawings.

### (First Embodiment)

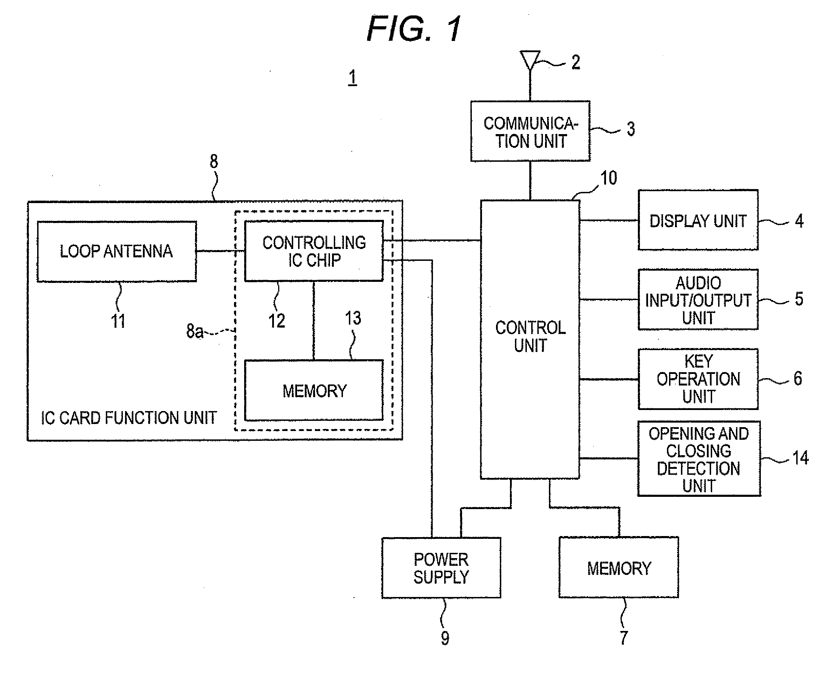

FIG. 1 is a block diagram showing a portable terminal device according to the first embodiment of the present invention.
The portable terminal device 1, as shown in drawings, includes an antenna 2 that performs data communication on a telephone conversation, etc., a communication unit 3 that performs data communication on a telephone conversation, etc by using the antenna 2, a display unit 4 that displays the communication contents, etc., an audio input/output unit 5, and a key operation unit 6 that allows a user to perform an operation such as setting, etc..

In addition, the portable terminal unit 1 includes a memory 7 that stores control data of communication operation, etc., an IC card function unit 8 having the settlement function of electronic money, a power supply 9 that supplies electric power to the portable terminal device, and a control unit 10 that controls operation of each of the units and sections.

The IC card function unit 8 configuring a charging communication unit, includes a loop antenna 11 that performs an RFID (Radio Frequency Identification) communication for a non-contact type settlement with an external apparatus such as a reader and writer, etc. (not shown), and an IC chip 8a that performs a non-contact type charging processing by using the loop antenna 11.
The IC chip 8a configuring, for instance, the Felica (registered trademark) chip, includes a controlling IC chip 12 that performs each processing of settlement of electronic money according to the Felica standard and a memory 13 that stores each data relating to the settlement of electronic money.

The IC chip 12 and the memory 13 are configured to be connected so that a trigger for start operation is generated by an induced electromotive force that is generated in the loop antenna 11 when an electromagnetic wave is received, when the portable terminal device 1 is put over the reader and writer mentioned above.
If the trigger for start operation is generated, the IC chip 12 and the memory 13 are configured to be connected to operate by electric power supplied from the power supply 9 of the portable terminal device 1. The memory 7 and the memory 13 configure a charging memory that stores charging information indicating charging target, using date, and charging classification, etc., a use history that accumulates the charging information, and information indicating charging classification relating to each of the charging information.

Next, operation will be described.
For example, a user settles the charge when using the railway of A station to B station on private business by using the Suica (Registered trademark) mode of the settlement function of electronic money that is provided in the portable terminal device 1.
Thereafter, when a user goes out on company business, the user settles the charge of A station to B station by using the Suica (Registered trademark) mode of the portable terminal device 1, like in the previous situation. This case is assumed in the following.

When settling the charge in the case of going out on company business, in more detail, when going through a ticket gate of a station, the user puts the portable terminal device 1 over the ticket gate while manipulating a special key of the portable terminal device 1, which will be described later.
By doing this way, thereafter, when the portable terminal device is manipulated to refer to the use history at the Suica (Registered Trademark) mode, an icon that indicates, for instance, a company use, is displayed at the charge for going through the ticket gate while manipulating the special key.
That is, the portable terminal device 1 displays the use history so that a user can determine whether each charging when using the settlement of electronic money is generated on private business or on company business.

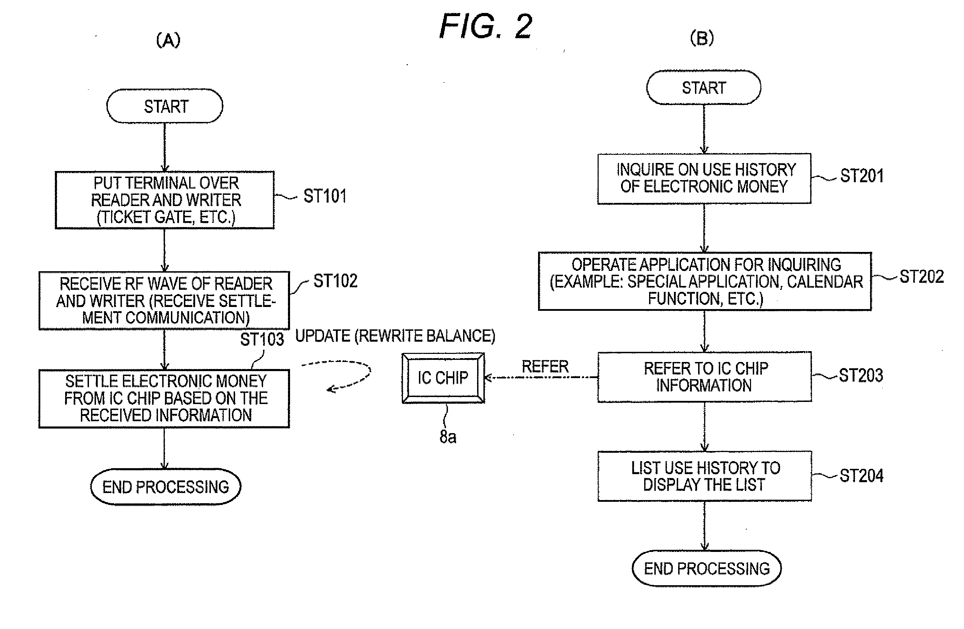

FIG 2 is an explanatory view showing an operation of the portable terminal device shown in FIG. 1, The drawing shows a flow chart (A) illustrating a processing operation at the time of the general use where the user puts the portable terminal device 1 over a reader and writer to perform the settlement of electronic money, that is, where the user does not discriminate between private business and company business.
In addition, FIG 2 shows a flow chart (B) illustrating a processing operation at the time of reading/inquiring the use history of electronic money by the portable terminal device, after the general use as shown in the flow chart (A).

In the flow chart (A) illustrating the state of general use, the portable terminal device, as shown in FIG. 1, is put over a reader and writer, for instance, such as a ticket gate of a station configuring a charging system (Step ST101). At this time, the portable terminal device 1 can be at any state where electric power is turned on or off. In the portable terminal device 1, which is put over the reader and writer, first, if the loop antenna 11 receives electromagnetic wave emitted from the reader and writer, an operation trigger of the IC card function unit 8 is generated, thereby electric power is supplied from the power supply 9 so that IC chip 8a is operated. At the time of the operation of the IC card function unit 8, it may be configured to inquire the control unit 10 as to whether the IC card function unit 8 is to be operated or not. When the IC chip 8a is operated, RF electromagnetic wave as a carrier based on the Felica standard, etc., which is transmitted as a charging communication from the reader and writer, etc., is received via the loop antenna 11 (Step ST102). Then, a session of communication between the reader and writer and the portable terminal device 1 is established.

The IC card function unit 8 or the IC chip 8a performs the same settlement processing of the charging system, that is, the electronic money, between when the power supply of the portable terminal device 1 is on and when the power is off.

In the process of step ST102 as described above, when the IC card function unit 8 is operated, the IC chip 8a updates charging information of the memory 13, and performs rewriting of the balance of electronic money. In more detail, the controlling IC chip 12 rewrites the balance information of electronic money that is stored in the memory 13, based on the charging information/settlement information of electronic money that is received from the reader and writer through the loop antenna 11, so as to perform the settlement of electronic money (Step ST103). That is, the amount charged as the payment of transportation fare from the reader and writer is reduced from the balance in the memory 13, and then if the reducing is safely completed, signal of the charging completion is transmitted to the reader and writer by using the loop antenna 11. In this way, the portable terminal device 1 performs the general charging processing.

As shown in the flow chart (A) of FIG 2, the portable terminal device 1 performs the general charging processing, and then, the portable terminal device 1 performs the processing operation, as illustrated in the flow chart (B), in response to a user's manipulation.

Hereinafter, FIG 2 (B) will be explained.
In reading processing of the use history of the portable terminal device 1, when the portable terminal device 1 is operated while being supplied with electric power from the power supply 9 of the portable terminal device 1 (power on state), the operation of inquiring on the use history of electronic money starts in response to the user manipulating the key operation unit 6 in a predetermined manner (Step ST201).

In Step ST201, if instruction is made by using the key operation unit 6 to inquire on the use history of electronic money, the control unit 10 starts to operate an application program for inquiring (Step ST202). The application program for inquiring is an application program of user interface, etc. displaying a list of use history of electronic money or a program having the function of displaying a calendar display including a use history.

The control unit 10, which has started the application program for inquiring, as mentioned above, reads and refers to the charging information that is stored in the IC chip 8a (memory 13) of the IC chip card unit 8 based on the program (step ST203).
In the meantime, the controlling IC chip 12 reads, by the control of the control unit 10, the charging information that represents the balance of electronic money and using date and that is stored in the memory 13, and transmits the charging information to the control unit 10.

The control unit 10 controls the display unit 4 to display the use history of electronic money, for instance, a list of the use history that is read from the IC chip 8a, based on the application program mentioned above (Step ST204).
As described above, the portable terminal device 1 stores using of electronic money in the general settlement of electronic money, and performs displaying of the use history.

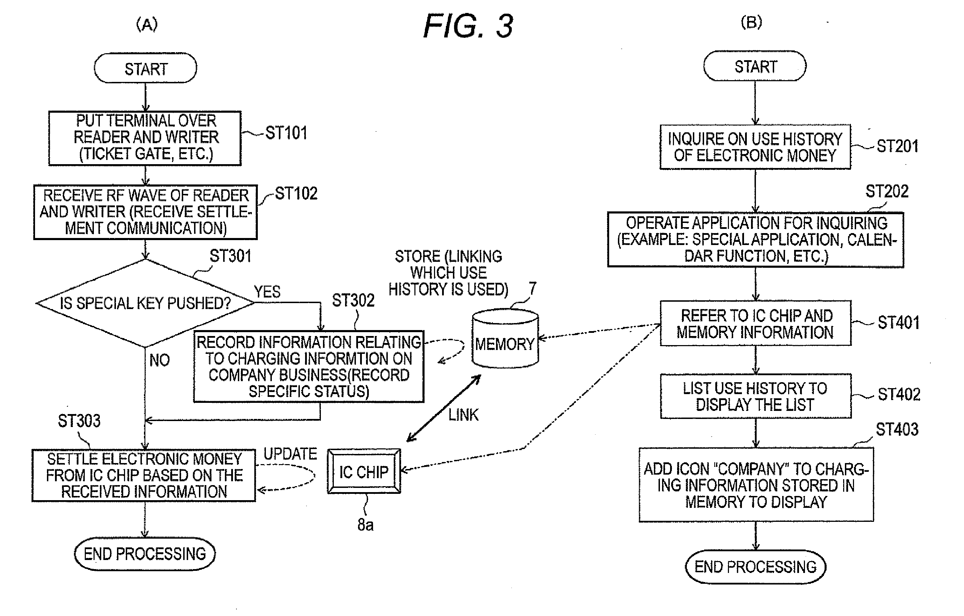

FIG. 3 is an explanatory view illustrating an operation of the portable terminal device as shown in FIG. 1. This drawing shows the flow chart (A) illustrating the processing operation including a specific use in which the settlement of electronic money is performed, for instance, on company business, by putting the portable terminal device over the reader and writer.
In addition, FIG. 3 shows the flow chart (B) illustrating the processing operation when performing writing/reading of the use history of electronic money in the portable terminal device 1, considering the case where the specific use as indicated in the flow chart (A) is performed.

In the flow chart (A) of FIG 3, the portable terminal device of FIG 1 is put over a charging system, for instance, a reader and writer such as a ticket gate in a station (Step ST101).
When the portable terminal device is put over the reader and writer, similarly to the case of FIG. 2(A), the IC chip 8a is operated, and RF electromagnetic wave based on the Felica standard that is transmitted from the reader and writer, etc. is received through the loop antenna 11 (Step ST102). Then, a session of communication between the reader and writer and the portable terminal device 1 is established.

Here, when the portable terminal device 1 is put over the reader and writer, the control unit 10 determines whether a predetermined condition is satisfied, such as whether the special key, which is provided in the key operation unit 6, is pressed (Step ST301). That is, it is determined whether a session of communication is established with a predetermined condition satisfied. In the case where a special button is pressed, that is, a predetermined condition is satisfied (Step ST301 "YES") in the step of establishing the communication session, charging classification information on company business is associated with charging information, as a specific use. In contrast, in the case where an special button is not pressed, that is, a predetermined condition is not satisfied (Step ST301 "NO") in the step of establishing the communication session, charging classification information is not stored especially, as a general use, but only charging processing is performed.

When the control unit 10 determines whether the special key is pressed as a predetermined condition, for instance, it is determined whether the pressed state is lasted more than a predetermined time of period (several seconds). That is, it is determined that the settlement is performed with the predetermined condition satisfied, in the case where counting of time starts with pressing of the special button and after several seconds elapse, the communication session is established between the reader and writer and the portable terminal device 1. In addition, after the special button is pressed, the settled state is maintained during the predetermined time of period (for instance, 5 seconds), and it is determined that the predetermined condition is satisfied if the session is established within 5 seconds. In contrast, if a session is not established even after 5 seconds elapse, it is determined to be a time out, and each unit may be controlled to return to a general state (a state where a predetermined condition is not satisfied). According to this configuration, it can be prevented from being settled unintentionally even though the special key is slightly pressed in error against a user's intention at the time of the settlement.

The special key is provided, for instance, at a side portion of a frame of the portable terminal device 1 by considering convenience, and the key is formed in a press button type. In the case where the portable terminal device 1 is configured by a plurality of casing pieces connected to be closed and opened and configured as one of types among a folder type, in which the display unit 4 (main display) is hidden when the case is at a closed state and a slide type or turn type, in which the display unit 4 (main display) is exposed even at any state of the closed and opened states, by providing the special key at a side portion of the case, that is, at a position where the key can be easily manipulated even at any state of the closed and opened states, there is no need to open or close the case whenever the type of settlement is changed, so that convenience is improved.

In addition, in a case where the portable terminal device 1 is configured as any one of the folder type, the slide type, or the turn type, the control unit 10 may be configured to determine that a predetermined condition is satisfied when a moving part thereof takes any one state of the closed/opened states. In order to determine whether to open or close, the control unit 10 checks a detection value of the closing and opening detection unit 14 which is formed of a lead switch, etc., thereby determining the closing and opening.

That is, in step S301, when a communication session with the reader and writer is established, the control unit 10 determines whether the case is closed or opened. As a predetermined condition, the opened state may be determined as a predetermined condition, or the closed state may be determined as a predetermined condition, as long as one of them is stored as a settlement type that is different from the other.
Meanwhile, the appearance/case of the portable terminal device 1 can be other types than the folder type, the slider type, and the turn type as mentioned above.

In other words, when the case piece configuring the exterior of the portable terminal device 1 is at any one state among the opened and closed states, the control unit 10 may be configured to determine that any one of predetermined conditions is satisfied similarly to the case where the special key is manipulated.
In addition, the control unit 10 may be adapted to detect that the special key is pressed/manipulated, when any one state among the opened and closed states and the press button type of special key are manipulated at the same time.
In addition, the special key may be a touch sensor or touch panel that detects change in electrostatic capacity, instead of the press button, in this case, the control unit 10 may determine that a predetermined condition is satisfied when the touch sensor or the touch panel is manipulated (touched).

The explanation will again be returned to FIG 3(A).
When the control unit 10 determines that a predetermined condition is satisfied (special key is pressed), the control unit 10 records information that represents charging information on company business in the memory 7 of the portable terminal device 1 (Step ST302).
Herein, various types of information on the settlement are recorded in the memory 7.
When the settlement is performed, first, the controlling IC chip 12 informs the control unit 10 of the charging information (types of purchased products, or amount, the time of charging). The control unit 10, which has been informed of the charging information, associates the charging information (types of purchased products, amount, the time of charging) with charging classification information indicating whether a predetermined condition is satisfied or not when a session of the charging is established, and then stores the result in the memory 7.
In other words, the control unit 10 writes in the memory 7 table that has contents identical to the charging information as a user history and is added with information (specific status) for determining whether it is on private business or on company business, separately from the charging information that is in sequence stored in the IC chip 8a. Thereby, linking is performed between the charging information and which charging is performed on private business or on company business so as to be determined later. Meanwhile, the charging information stored in the memory 7 needs not be all of information that is stored in the memory 13, but only the management addresses and charging time specifying the charging information stored in the memory 13 may be stored while being associated with charging classification information.

Meanwhile, in the process of step ST301 as described previously, when it is determined that the special key is not pressed (a predetermined condition is not satisfied), similarly to the process of step ST103 as mentioned above, the IC chip 8a updates the charging information of the memory 13 and performs rewriting the balance of electronic money (Step ST303). In addition, even after the process of step ST302 is performed, update of charging information of the memory 13 and rewriting of balance are performed in the process of step ST303.
Meanwhile, according to a second embodiment, the control unit 10 may be configured to refer to the opening and closing as a predetermined condition by using the detection value of the opening and closing detection unit 14, or to refer to the contact on the touch sensor or touch panel as a predetermined condition, instead of the press button.

As shown in the flow chart (A) of FIG. 3, after the specific charging processing is performed in the portable terminal device 1, the portable terminal device 1 performs the processing operation shown in the flow chart (B) of FIG. 3, in response to a user's appropriate manipulation.

Hereinafter, FIG 3(B) will be explained.
In the reading process of the use history of the portable terminal device 1, when the portable terminal device 1 is operating by electric power being supplied from the power supply 9 (power supply turned on), if a user performs a predetermined manipulation with the key operation unit 6, the operation of inquiring on the use history of electronic money starts (Step ST201).
In step ST201, if an instruction is made by using the key operation unit 6 to inquire on the use history of electronic money, the control unit 10 runs an application program for inquiring in the same manner as in the operation explained with reference to FIG. 2 (Step ST202).

The control unit 10 refers to the use history that is stored in the IC chip 8a (memory 13), by using information that represents charging information on company business, which is stored in memory 7 based on the application program for inquiring operated (Step ST401).
That is, when the control unit 10 reads the use history from the IC chip 8a, it refers to the charging classification information representing whether it is a specific use, which is stored in the memory 7 and the use history which is stored in the IC chip 8a. That is, when the use history stored in the IC chip 8a is read, it refers to whether each of the corresponding charging classification information is separately stored in the memory 7, according to each of the charging information of the use history. The charging information including the corresponding charging classification information is discriminated as the charging information relating to a specific use such as a company business.
The control unit 10 lists the use history of electronic money that is read from the IC chip 8a based on a user's interface as mentioned above, thereby controlling the display unit 4 to display the list (Step ST402).

In the process of step ST402, when the control unit 10 displays the charging information relating to a discriminated specific use (for instance, company business), the control unit 10 adds an icon representing "company" at a portion for displaying the corresponding charging information, so as to be discriminated from other charging information for not the specific use (Step ST403).

Meanwhile, instead of displaying the icon, the font color of portion of displaying the charging information on a company business may be different from the display color of charging information on private use thereby being discriminated from each other. Alternatively, the portion of displaying the charging information on a specific use may be different in background color or background picture from the portion of displaying the charging information on a general use, thereby being discriminated from each other. Alternatively, the folder may be managed according to each use, thereby a folder of portion of displaying the charging information on a general use and a folder of portion of displaying the charging information on a specific use may be classified to be displayed.

In addition, when the control unit 10, in the process of step ST402 mentioned above, displays charging information by using a user's interface, for instance, the control unit 10 may display only the charging information on a predetermined use in response to a user's manipulation of the key operation unit 6.
In detail, for instance, the control unit 10 may display the use history relating to charging information on company business only, or display the use history of charging information on private business only.

As described above, according to the first embodiment, information that represents the charging information on a specific use is stored in the memory 7 of the portable terminal device 1, and when the use history stored in the IC chip 8a is displayed in the display unit 4, the charging information on specific use is discriminated by using the information stored in the memory 7.
Accordingly, when the use history of electronic money is displayed in the display unit 4, the charging information on a general use and the charging information on a specific use can be discriminated.

### (Second embodiment)

The portable terminal device according to the second embodiment is configured in the same manner as the portable terminal device as shown in FIG. 1. Herein, the explanation of the same configuration as the portable terminal device described in the first embodiment will be omitted.

Next, the operation will be described
The portable terminal device 1 according to the second embodiment operates approximately in the same manner as described in the first embodiment. Herein, the characterizing operation of the portable terminal device 1 according to the second embodiment will be described mainly, and the same operation as in the portable terminal device 1 according to the first embodiment will not be described.

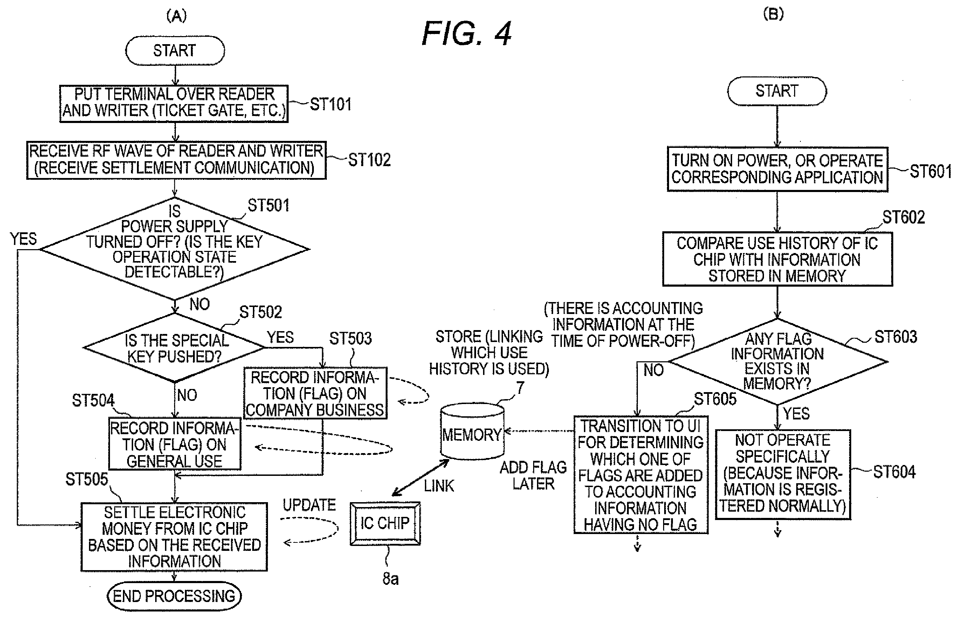

FIG. 4 is an explanatory view illustrating the operation of the portable terminal device according to the second embodiment of the present invention.
The drawing shows a flow chart (A) illustrating the processing operation when the portable terminal device 1 is put over the reader and writer, so that the settlement of electronic money is performed for the purpose of a first use (for instance, on private business), and the processing operation when the settlement of electronic money is performed for the purpose of a second use (for instance, company business).
In addition, FIG. 4 shows a flow chart (B) illustrating the processing operation in the case where the portable terminal device 1 performs reading/inquiring a use history of electronic money in the portable terminal device 1 when the settlement of electronic money, that is, the charging processing, as shown in the flow chart (A) is performed.

In the flow chart (A), the portable terminal device 1 shown in FIG. 1 is put over a reader and writer such as, for instance, a ticket gate of a station, which configures the charging system (Step ST101). At this time, the portable terminal device 1 may be at any one state of power turned on and off.
The portable terminal device 1 that is put over the reader and writer receives a RF electromagnetic wave, which is based on the Felica standard that is transmitted from the reader and writer by operating of the IC card function unit 8, via the loop antenna 11 (Step ST102). Then, a communication session between the reader and the portable terminal device 1 is established.

Next, it is determined whether the power supply of the portable terminal device 1 is turned off (Step ST501). In this determination, it is determined whether or not the manipulation of the key operation unit 6 can be detected. Of course, when the power supply is turned off, the control unit 10 can not determine that the control unit 10 itself is turned off. For that reason, when the IC chip 8a receives RF electromagnetic waves to be operated, it is determined whether the control unit 10 is turned on or off. Then, only when it is determined as ON state, the process proceeds to step ST502. In the other case, the IC chip 8a independently operates and process proceeds to step ST505.

In the case where electric power is turned on, the control unit 10, in the process of step ST501, determines whether the special key as previously described is pressed or not, that is, whether a communication session is established with a predetermined condition satisfied (Step ST502). Here, when the control unit 10 determines that a predetermined condition is satisfied, the control unit 10 records charging classification information, which represents the charging information on a first use (company business), in the memory 7(Step ST503). At this time, the control unit 10 stores in the memory 7 as the charging classification information that represents charging information of company business, a flag representing a company business as being 1 (valid) together with information specifying the charging information stored in the memory 13. That is, linking is performed to the charging information to determine later which charging information is on company business, that is, which charging information has a specific status, among the use history stored in sequence in the IC chip 8a.

Meanwhile, in the process of step ST502, when the control unit 10 determines that the special key is not at a pressed state, that is, a predetermined condition is not satisfied when a communication session is established, the control unit 10 records in the memory 7 the charging classification information that represents charging information of a second use (private business) (Step ST504). At this time, the control unit 10 stores in the memory 7 as the charging classification information that represents charging information of a second use, that is, a private business, a flag different from the first use (company business) as being 1 (valid), together with the information specifying the charging information that is stored in the memory 13.
The control unit 10, even when storing a flag relating to general charging information, stores as to which information out of the use history is associated to the flag indicated as valid, in the same manner as storing of the flag representing the charging information on private business, to performs linking to corresponding information in the use history.

In addition, the control unit 10 causes the IC chip 8a to perform the settlement processing of electronic money, based on the charging information that is received from the reader and writer after the process of step ST503 or step ST504 (Step ST505). That is, the IC chip 8a is caused to update information on the balance of electronic money that is stored in the memory 13. At this time, it goes without saying that the information (time information, or management address) specifying the charging information that is held in the memory 7 is stored in the memory 13 according to each of the charging information.
That is, the portable terminal device according to the second embodiment performs the settlement of electronic money while storing the flag representing the charging information on the first use and the flag representing the charging information on the second use in the memory 7.

As shown in the flow chart (A) of FIG. 4, the portable terminal device 1 performs the charging processing, and, then the portable terminal device 1 appropriately performs the processing operation as shown in the flow chart (B) of FIG 4 in response to a user's manipulation.

Hereinafter, FIG. 4(B) will be explained.
When the power supply of the portable terminal device is turned on, or a user manipulates the key operation unit 6, the control unit 10 operates the corresponding application program in response to the manipulation (Step ST601).

When program for reading the use history of electronic money is operated in the process of step ST601, the control unit 10 compares the use history stored in the IC chip 8a with the information stored in the memory 7 (Step ST602). At this time, the control unit 10 determines whether or not any charging classification information exists in the memory 7 (Step ST603). That is, it is determined whether or not any one of the flag representing the first use (company business) and the flag representing the second use (personal use) is associated with each of the charging information.

The control unit 10 does not perform any specific processing operation (Step ST604) if any flag information relating to all charging information is stored in the memory 7 (Step ST603 "YES"), but performs the processing operation of displaying the charging information, that is, the use history including the kind of purchased products, the amount, and the charging time, based on the user interface of performing the display as described above.

In step ST603, when the control unit 10 determines that the charging information that is not associated with any flag information exists in the memory 7 (Step ST603 "NO"), it is considered that while the power supply of the portable terminal device 1 is turned off, only the IC card unit 8 operates to use electronic money. Thus, the control unit 10 causes a transition of displaying a screen by which a user can determine which flag should be added to the charging information having no flag (Step ST605).

The control unit 10, in the process of step ST605, operates the program of, for instance, a graphic user interface (hereinafter, GUI). The control unit 10 displays the screen of displaying the GUI on the display unit 4, thereby allowing a user to set the charging target and charging type. Herein, the control unit 10 allows discriminating between the first use and the second use for all the charging information having no flag, by a user's manipulation input, and additionally storing any one of the flags for each of the charging information in the memory 7, based on the results.

In this way, the portable terminal device 1 or the control unit 10 prompts a user to discriminately determine and additionally manipulate the charging information on the use history having no corresponding flag, thereby storing the flag representing any one of the fist use (company business) or second use (private business) in the memory 7.
Thereafter, as long as the charging processing is not performed while the power supply is turned off, when a user manipulates the portable terminal device 1 to operate the application program for displaying the use history, the flag for discriminating between the first use (company business) and the second use (personal use) is associated with all charging information. Therefore, transition to the previously described GUI (displaying a screen for performing adding of flag) is not performed. And, charging classification is displayed for all charging information.

As illustrated in the above, according to the second embodiment, the control unit 10 of the portable terminal device 1 allows storing the flag representing charging classification, for each of the charging information forming the use history that is stored in the IC chip 8a, in the memory 7. Therefore, when a user refers to the use history of the settlement function of electronic money in the portable terminal device 1, the user can discriminately read the charging classification for each of the uses such as the company business and the private business, etc.

In addition, when the power supply of the portable terminal device 1 is turned off, if the IC card function unit 8 operates to perform the settlement of electronic money, the control unit 10 allows a user to input and set the use classification of electronic money when the power supply of the portable terminal device 1 is turned on. Therefore, when the use history of electronic money of the portable terminal device 1 is displayed later, the use classification relating to each of the charging information can be displayed.

### (Third embodiment)

The charging system using the portable terminal device according to the third embodiment allows discriminating and settling a plurality of kinds of electronic moneys without making an effort of informing an operator in a shop of the kind of electronic moneys to be used by a user.

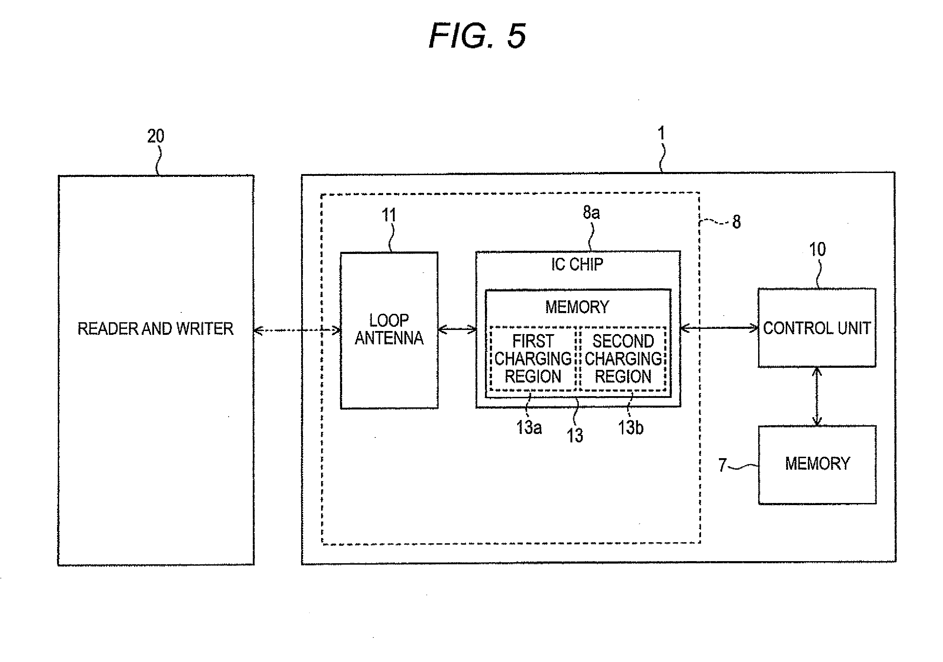

FIG. 5 is a block diagram showing the configuration of the charging system using the portable terminal device according to the third embodiment of the present invention. In the drawing, the same elements as in the portable terminal device 1 shown in FIG. 1 are referred to as same numerals.

The portable terminal device 1 according to the third embodiment of the present invention has the same configuration as that illustrated in the first or second embodiment. Herein, the same configuration as the portable terminal device 1 according to the first or second embodiment of the present invention will not be explained repeatedly.
The reader and writer 20 is a settlement unit of electronic money for performing data communication with the portable terminal device 1 in relation to the settlement of electronic money, for instance, such as a cash register in a shop.

The reader and writer 20 as an external apparatus, and the IC card function unit 8 or the IC chip 8a of the portable terminal device 1 are configured to transmit and receive data by means of wireless communication, similarly to the explanation of the first embodiment above. Meanwhile, although it is not a physical element but a logical element, according to the third embodiment, to simplify the explanation, the memory 13 in the IC chip 8a includes a first charging region 13a and a second charging region 13b. The first charging region 13a and second charging region 13b are stored with information on electronic money that is managed by different systems. The reader and writer 20 supports any of the plurality of settlement types (first type settlement, second type settlement). And, if the IC chip 8a as described above is operated, the reader and writer 20 establishes a physical session between the IC chip 8a, and thereafter, requests authentication in the second type settlement under the logical session. Herein, if the authentication in the second type settlement succeeds, the charging processing in the second type settlement is performed. In addition, in the case where authentication in the second type settlement is failed, a re-authentication request in the first type settlement is configured to be made.

The portable terminal device 1 according to the third embodiment allows the IC chip 8a to discriminate a plurality of kinds of electronic moneys to perform the clearance/settlement. The IC chip 8a has a plurality of settlement sections relating to each of the electronic moneys.
In detail, in performing data communication with the reader and writer 20, the controlling IC chip 12 of the IC chip 8a discriminates each of the electronic moneys such as the Suica (registered trademark), the Edy (registered trademark), etc. and includes a settlement section that performs settlement processing in the Suica (registered trademark) mode, and a settlement section that performs the settlement processing in the Edy (registered trademark) mode.

In addition, the controlling IC chip 12 has a function of storing balance and/or use history in the memory 13, for each of the settlement sections.
In the meantime, each electronic money such as Suica (registered trademark) and Edy (registered trademark) including charging and billing is uniformly managed by a management server of electronic money via a public telecommunication network to which the reader and writer is connected, and each of them is a separated electronic money system.

Next, the operation will be explained.
The portable terminal device 1 according to the third embodiment operates approximately in the same manner as explained in the first embodiment, or explained in the second embodiment. Herein, the characterizing operation of the portable terminal device according to the third embodiment will be explained mainly, and the same operation of the portable terminal device 1 as in the first or second embodiment will be omitted.

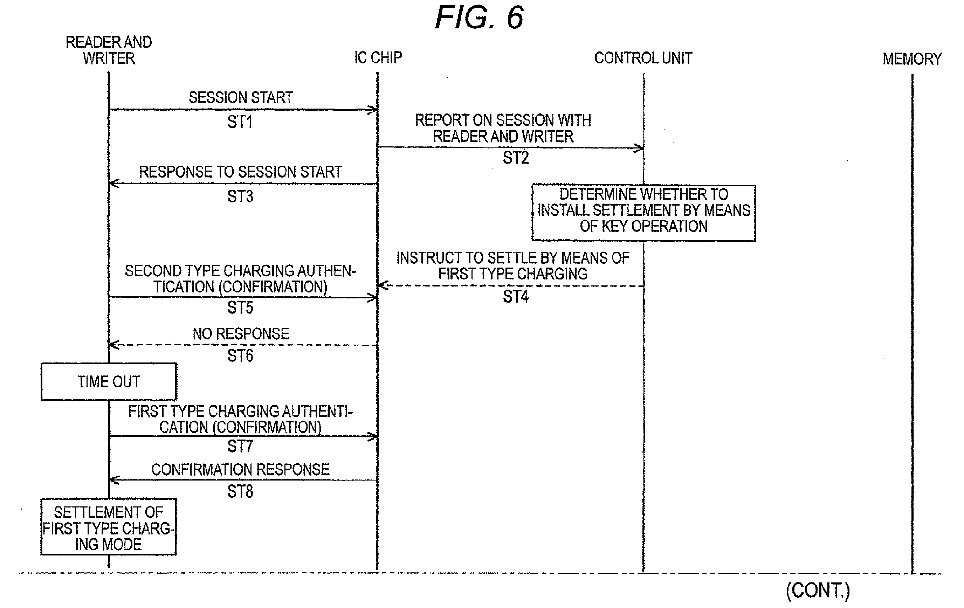

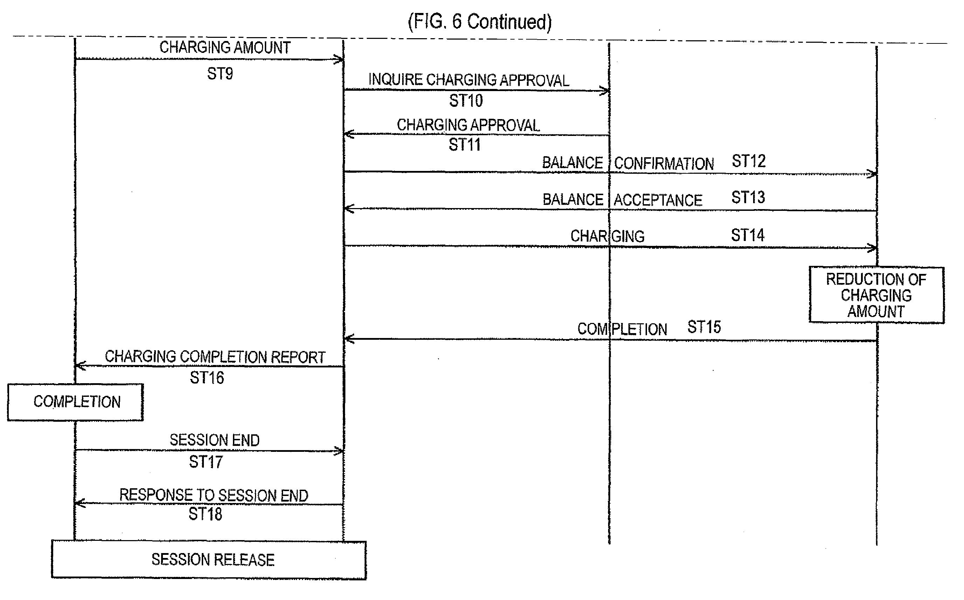

FIG 6 is an explanatory view showing the operation of the charging system using the portable terminal device of FIG. 5. The drawing is a sequential view showing the processing operation when the reader and writer 20 and the IC chip 8a of the IC card function unit 8 perform the settlement of electronic money.
First, the portable terminal device 1 is approached by the reader and writer 20, and the rear side portion provided with the IC card function unit 8 of the portable terminal device 1 is put over a communication antenna portion of the reader and writer 20.

The reader and writer 20 transmits data representing the session opening to the IC card function unit 8 of the portable terminal device 1 (ST1). The IC chip 8a of IC card function unit 8 receives a trigger for start operation which is generated by an induced electromotive force caused by an electromagnetic wave of the received carrier wave, thereby being supplied with electric power from the power supply 9 to start the operation. Then, the IC chip 8a decodes data representing a session opening from the carrier wave, thereby detecting the opening of the settlement processing of electronic money. And the IC chip 8a informs the control unit 10 of the opening of session with the reader and writer 20 (ST2).
The IC chip 8a transmits data representing a response to the opening of session to the reader and writer 20, so that a physical communication session is established (ST3).

Meanwhile, when the session with the reader and writer 20 is established, the control unit 10 determines whether or not a predetermined condition, which is same as that explained in the first and second embodiments, is satisfied.
In the case where it is determined that the predetermined condition is satisfied, the control unit 10 instructs the IC chip 8a to perform the settlement processing by means of the first type settlement of electronic money, for instance, the Edy (registered trademark), which is set based on the condition contents, whereas in the case where it is determined the predetermined condition is not satisfied, the control unit 10 instructs the IC chip 8a to perform the settlement processing by means of the second type settlement of electronic money, for instance, the Suica (registered trademark) (ST4).

Herein, in the case where the pressed state of the predetermined key is set as a predetermined condition, the portable terminal device 1 is configured to determine whether or not the session is established in the state where the user presses the predetermined key, which is arranged at the side of case of the key operation unit 6.
In this way, according to the charging system using the portable terminal device according to the third embodiment, the kind of electronic moneys, that is, the settlement target is set by a user performing the manipulation of the key of the portable terminal device 1.

The IC chip 8a according to the third embodiment is configured to determine whether or not an authentication request is made in a settlement type corresponding to the settlement type that is instructed from the control unit 10, as described in the above. And, when an authentication request is made in a settlement type corresponding to the settlement type as instructed, the IC chip 8a transmits a response to the reader and writer 20 so that the settlement can be performed, whereas when an authentication request is made in a settlement type that is not corresponding to the settlement as instructed, the IC chip 8a does not respond.
The IC function unit 8 is capable of performing the settlement/charging processing even though the power supply of the portable terminal device 1 is turned off, as described in the above.

Next, in step ST5, the reader and writer 20 transmits an authentication request in the second type settlement under a logical session.
Herein, since the first type settlement is instructed in step ST4 and is different from the settlement type requested by the reader and writer 20, the IC chip 8a does not respond to the reader and writer 20 (ST6).
Thereafter, if a predetermined time elapses at a state of no response (time out), at this time, the reader and writer 20 transmits an authentication request in the first type settlement under a logical session (ST7). In this case, since it is determined that the reader and writer 20 requests a settlement type identical to the first type settlement that is instructed from the control unit 10 in the step ST4, the IC chip 8a performs a confirmation response to the reader and writer 20 (ST8).

The reader and writer 20 starts the settlement processing at the Edy (registered trademark) mode when it receives a confirmation response to the settlement made by means of the Edy (registered trademark) from the portable terminal device 1 or the IC chip 8a.

When the reader and writer 20 performs the charging processing by means of, for instance, Edy (registered trademark), it transmits charging data, which represents charging time in addition to product item and charging amount to be paid by a user, to the portable terminal device 1 (IC chip 8a) (ST9).
If the IC chip 8a receives charging data representing the charging amount, it makes inquiries to the control unit 10 for requesting an approval to the charging processing (ST10). When any condition, etc. approving of the predetermined charging processing is satisfied, the control unit 10 transmits that the charging processing is approved to the IC chip 8a (ST11).

If the control unit 10 approves the charging, the controlling IC chip 12 of the IC chip 8a performs confirming of the balance of electronic money for the first charging region 13 of the memory 13 to determine whether or not the charging amount charged from the reader and writer 20 can be paid (ST12).
When it is determined by the confirmation of the balance in the memory 13 (first charging region 13a) that the balance of the electronic money, for instance, the Edy (registered trademark) as the first settlement section is payable and the settlement is acceptable (ST13), the controlling IC chip 12 of the IC chip 8a performs the charging processing of the amount transmitted from the reader and writer 20 as described in the above to the balance stored in the memory 13 (first charging region 13a).

After the controlling IC chip 12 reduces the charging amount from the balance amount of the Edy (registered trademark) that is stored in the memory 13, it completes the settlement processing by means of the first settlement section (ST15).
The IC chip 8a performs the settlement processing of electronic money as described in the above, updates the balance amount stored in the memory 13, and then transmits the completion report of the charging processing to the reader and writer 20(ST16).

If the reader and writer 20 receives the charging completion report from the IC chip 8a, it displays an indication of completing the settlement processing of electronic money by means of the first type settlement section on a display unit (not shown) of a cash register in a shop, and, at the same time, transmits data representing the session completion to the IC chip 8a, that is, the portable terminal device 1 (ST17).
If the IC chip 8a receives data representing the session completion, it performs a predetermined processing, and transmits data representing a response to the session completion to the reader and writer, thereby releasing the session (ST18).

In the meantime, in the state of being informed of the session in step ST2, if the predetermined condition is not satisfied (when the predetermined key is pressed, etc.), the control unit 10 instructs the IC chip 8a to receive the charging by means of the second type settlement in step ST4. In this case, a response is made to an authentication in the first type settlement in step ST5, and the subsequent settlement processing is performed.

The IC card function unit 8 or the IC chip 8a of the portable terminal device 1 according to the third embodiment is capable of performing a settlement processing even when the power supply of the portable terminal device 1 is turned off. However, when the power supply is turned off, the determination of the key pressing and the predetermined condition can not be satisfied. That is, in step ST2 when a session is notified, it is assumed that the predetermined condition is not satisfied, so that the IC chip 8a receives the charging charged by means of the second type settlement to perform the settlement processing.

The IC chip 8a provided in the portable terminal device 1 according to the third embodiment performs processing by using the same settlement section between the case where the power supply is turned off and the case where setting such as pressing of a predetermined key by a user is not performed. That is, the settlement processing for the electronic money in the second charging region of the memory 13 is performed in the second type settlement system.

As described above, according to the third embodiment, the IC chip 8a of the portable terminal device 1 is provided with a plurality of settlement sections, and also, the reader and writer 20 is provided with a plurality of settlement sections. And, the reader and writer 20 is configured to sequentially transmit a message for requesting an authentication of each settlement section, to the portable terminal device 1. And, the reader and writer 20 is configured to perform the settlement processing of electronic money using the settlement section that is authenticated by the portable terminal device 1. Therefore, a user can perform the settlement of electronic money by using the settlement section that is set in the portable terminal device 1, without verbally notifying of the settlement section to be used from the user.
If a display request of the charging information is made by appropriately manipulating the key operation unit 6, the control unit 10 causes the IC chip 8a to refer to the first charging region and the second charging region of the memory 13. According to the result of the reference, the control unit 10 causes the display unit 4 display the balance of electronic money and the charging information stored in each of the regions. Accordingly, despite the simple manipulation, a user can immediately confirm the use circumstances of electronic money.

In the above, although the first and second embodiments and the third embodiment are explained, the specific terms as used in each explanation are merely used to simplify the explanation, but the present invention is not limited to these terms.
First, in the first and second embodiments, although an example where the portable terminal device 1 processes the charging information on private business and the charging information on company business is explained, the portable terminal device according to the present invention is not limited to the discrimination between the above two kinds of uses.
The portable terminal device according to the present invention can perform the processing in the same manner as described in each of the embodiments while the uses of payment are classified into a plurality of uses such as company business, private business and entertainment expenses, etc. And, even in the case where they are classified into a plurality of uses not less than two kinds, same effect can be obtained.

In the third embodiment, although two kinds such as the Suica (registered trademark) and Edy (registered trademark) are described as examples within Japan, it doesn't matter other settlement sections are used.
In addition, the IC chip 8a may have a third settlement section, or the reader and writer may have a third settlement section. Even in any case, if the IC chip 8a is configured to respond to the reader and writer 20 only when an authentication request in the settlement type selected by the control unit 10 occurs, the same effect as the present invention can be obtained.

Further, although it is determined only whether a predetermined key is pressed or not as a predetermined condition, the present invention is not limited to such a case. For instance, the settlement sections may be discriminated by pressing the "1 key" and "2 key" on a numeric keypad. In this case, in the step of determining a predetermined condition followed by step ST2, the control unit 10 determines the key type pressed, and instructs the IC chip 8a to respond to only the settlement type according to the key type, in step ST4, to realize the above.

Further, although an example of determining whether or not the key is pressed when a physical session is established is mainly described as a predetermined condition. However, similarly to the first and third embodiment, whether or not a predetermined condition is satisfied may be determined by detecting the opening and closing state of the closable and openable case, or the settlement types may be discriminated based on the closed state or opened state.

Meanwhile, to simplify the explanation, although explanation is divided into three, the first, second, and third embodiments, these embodiments are not exclusive relations. That is, the first to third embodiments may be integrated into one. That is, a portable terminal device having a plurality kinds of electronic money may be controlled to make a difference in settlement method and settlement information based on whether or not predetermined conditions W, X, Y and Z are satisfied.

For example, at the settlement on company business, if the condition W is satisfied with a user's manipulation or a state of case, etc., the settlement by means of first electronic money is performed, and at the same time, information on company business is stored in relation to the settlement information of the first electronic money. Meanwhile, if the condition X is satisfied, the settlement by means of the second electronic money, not the first electronic money, is performed although the settlement is on company business, and at the same time, information on company business is stored in relation to the settlement information of the second electronic money. And, at the settlement on private business, if the condition Y is satisfied with a user's manipulation or case state, the settlement by means of the first electronic money is performed, and at the same time, information on private business is stored in relation to the settlement information of first electronic money. Meanwhile, if the condition Z is satisfied, the settlement by means of the second electronic money is performed, and at the same time, information on private business is stored in relation to the second electronic money.

As controlling in this manner and managing the stored information, a special effect can be obtained that a user can confirm the settlement history according to the use type at a glance by making a difference in displaying the use type of private business and company business within the settlement history of each kind of electronic money.

Although the present invention has been described in detail, and referring to specific embodiments, it is obvious for the skilled person to change or modify variously the present invention without departing from the spirit and the scope thereof.
This application is based on Japanese Patent Application No. 2008-169688, filed on June 27, 2008, and Japanese Patent Application No. 2008-169689, filed on June 27, 2008, the contents of which are incorporated herein by reference.

### Industrial Applicability

According to the present invention, there may be provided a portable terminal device capable of selectively performing a charging form with convenience for a user, a charging processing method for the portable terminal device, and a charging system using the portable terminal device.

### Description of Reference Numerals

1: portable terminal device, 2: antenna, 3: communication unit, 4: display unit, 5: audio input/output unit, 6: key operation unit, 7: memory, 8: IC function section, 9: power supply, 10: control unit, and 20: reader and writer

## Claims

1. A portable terminal device comprising:
a charging communication unit that includes a plurality of settlement sections and performs a charging communication relating to settlement of electronic money with an outside for each of the plurality of settlement sections;
a storing unit that stores charging information on settlement of the electronic money for each of the plurality of settlement sections; and
a control unit that determines whether a predetermined condition is satisfied when the charging communication unit performs the charging communication, and that updates each charging information of the storing unit, by using a first settlement section if the predetermined condition is satisfied and by using a second settlement unit if the predetermined condition is not satisfied.

2. The portable terminal device according to claim 1, further comprising:
a display unit that displays the charging information stored in the storing unit by controlling of the control unit,
wherein when displaying the charging information on the display unit, the control unit controls to display thereon the charging information for each of the first settlement section and the second settlement section by referring to stored contents of the storing unit.

3. The portable terminal device according to claim 1 or 2,
wherein at the starting of the charging communication by the charging communication unit, if the predetermined condition is satisfied, the control unit controls the charging communication unit not to make a response even if authentication of the second settlement section is requested by an external reader and writer, and the control unit controls the charging communication unit to make a response if authentication of the first settlement section is requested.

4. The portable terminal device according to any one of claim 1 to 3,
wherein the charging communication unit is capable of performing settlement even when a power supply of the portable terminal device is off, and
wherein when power supply is off, the charging communication unit performs charging processing by the second settlement section, which is same as when any manipulation is not performed when the predetermined condition is not satisfied.

5. The portable terminal device according to any one of claims 1 to 4, further comprising:
an operation unit,
wherein the predetermined condition is that the charging communication unit starts the charging communication at a state where the operation unit is manipulated.

6. The portable terminal device according to any one of claims 1 to 4, further comprising:
a closeable and openable case;
wherein the predetermined condition is that the charging communication unit starts the charging communication at either one of an opened state and a closed state of the case.

7. The portable terminal device according to any one of claims 1 to 6,
wherein the charging communication unit is capable of performing settlement independently from the control unit even when a power supply of the portable terminal device is off, and
wherein the storing unit is controlled by the charging communication unit independently from the control unit.

8. A charging processing method for a portable terminal device, the method comprising:
a charging communication unit performing a communication relating to settlement of each electronic money with an outside by a plurality of settlement sections;
storing in a storing unit charging information on settlement of the electronic money for each of the plurality of settlement sections;
determining whether a predetermined condition is satisfied when the charging communication unit performs the charging communication; and
selecting a first settlement section if the predetermined condition is satisfied, and selecting a second settlement section if the predetermined condition is not satisfied.

9. A charging system comprising a reader and writer, and a portable terminal device that performs a charging communication relating to settlement of electronic money with the reader and writer,
wherein the portable terminal device includes:
a charging communication unit that includes a plurality of settlement sections and performs a charging communication relating to settlement of electronic money with an outside for each of the plurality of settlement sections;
a charging communication unit that includes a plurality of settlement sections and performs a charging communication relating to settlement of electronic money with an outside for each of the plurality of settlement sections;
a storing unit that stores charging information on settlement of the electronic money for each of the plurality of settlement sections; and
a control unit that determines whether a predetermined condition is satisfied when the charging communication unit performs the charging communication, and that updates each charging information of the storing unit, by using a first settlement section if the predetermined condition is satisfied and by using a second settlement section if the predetermined condition is satisfied, and wherein the reader and writer is configured to:
support the plurality of settlement sections,
when communication with the portable terminal device starts, transmit to the portable terminal device an authentication request for charging processing by one of the first settlement section and the second settlement section,
if there is a repose to the authentication request, perform a charging processing by the responded settlement section, and
if there is no response to the authentication request for a predetermined time of period, transmit an authentication request by the other settlement section.

10. A portable terminal device comprising:
a charging communication unit that performs a charging communication relating to settlement of electronic money with an outside;
a storing unit that stores charging information on settlement of the electronic money; and
a control unit that determines whether a predetermined condition is satisfied when the charging communication unit performs the charging communication, and stores charging information obtained through the charging communication while being associated with classification information that represents different charging type depending on whether the predetermined condition is satisfied or not.

11. The portable terminal device according to claim 10, further comprising:
a display unit that displays the charging information stored in the storing unit by controlling of the control unit,
wherein when displaying the charging information on the display unit, the control unit controls to display the charging information together with information based on the classification information by referring to stored contents of the storing unit.

12. The portable terminal device according to claim 11,
wherein the charging communication unit is capable of performing settlement independently from the control unit even when a power supply of the portable terminal is off,
wherein when the power supply of the portable terminal device is turned on, the control unit determines whether the charging communication is performed while the power supply is off, and
wherein if it is determined that the charging communication is performed, the control unit causes the display unit to display a screen for setting classification information for the charging information in the charging communication and stores a set result in the storing unit.

13. The portable terminal device according to claim 11,
wherein the charging communication unit is capable of performing settlement independently from the control unit even when a power supply of the portable terminal is off,
wherein when the power supply of the portable terminal device is turned on, or when charging information is requested to be displayed on the display unit, the control unit determines whether the storing unit has charging information that is not associated with any classification information, and
wherein if charging information that is not associated with any classification information exists, the control unit causes the display unit to display a screen for setting classification information for the charging information and stores a set result in the storing unit.

14. The portable terminal device according to claim 11,
wherein the charging communication unit is capable of performing settlement independently from the control unit even when a power supply of the portable terminal is off,
wherein the storing unit includes a first storing unit that is controlled by the charging communication unit and a second storing unit that is controlled by the control unit and stores the classification information,
wherein when the power supply of the portable terminal device is turned on, or when charging information is requested to be displayed on the display unit, the control unit compares charging information stored in both of the first storing unit and the second storing unit, and
wherein if the charging information that is not stored in the second storing unit but stored in the first storing unit exists, the control unit causes the display unit to display a screen for setting classification information for the charging information and stores a set result in the second storing unit.

15. The portable terminal device according to any one of claims 10 to 14, further comprising:
a display unit that displays the charging information stored in the storing unit by controlling of the control unit,
wherein when displaying a plurality of the charging information on the display unit, the control unit refers to stored contents of the storing unit and causes to display only charging information on one of charging when the predetermined condition is satisfied and charging when the predetermined condition is not satisfied.

16. The portable terminal device according to any one of claims 10 to 14, further comprising:
an operation unit,
wherein the predetermined condition is that the charging communication unit starts the charging communication at a state where the operation unit is manipulated.

17. The portable terminal device according to any one of claims 10 to 14, further comprising:
a closeable and openable case;
wherein the predetermined condition is that the charging communication unit starts the charging communication at either one of an opened state and a closed state of the case.

18. A portable terminal device comprising:
a charging communication unit that includes a plurality of settlement sections and performs a charging communication relating to settlement of electronic money with an outside for each of the plurality of settlement sections;
a storing unit that stores charging information on settlement of the electronic money for each of the plurality of settlement sections; and
a control unit that determines which one of a plurality conditions is satisfied when the charging communication unit performs the charging communication,
wherein if a first condition among the plurality of conditions is satisfied, the control unit performs settlement by using a first settlement section and stores the charging information in the storing unit while being associated with first classification information representing a first charging type,
wherein if a second condition among the plurality of conditions is satisfied, the control unit performs settlement by using a second settlement section and stores the charging information in the storing unit while being associated with the first classification information,
wherein if a third condition among the plurality of conditions is satisfied, the control unit performs settlement by using the first settlement section and stores the charging information in the storing unit while being associated with second classification information representing a second charging type, and
wherein if a fourth condition among the plurality of conditions is satisfied, the control unit performs settlement by using the-second settlement section and stores the charging information in the storing unit while being associated with the second classification information.
